# EUROPEAN PATENT SPECIFICATION

(11) **EP 1 814 961 B1**
(45) Date of publication and mention of the grant of the patent: **26.12.2012**
(21) Application number: 05803779.7
(22) Date of filing: 16.11.2005
(51) Int. Cl.: C09K 8/12, C09K 8/24

(54) **ENVIRONMENTALLY FRIENDLY WATER BASED MUD DEFLOCCULANT/THINNER**
UMWELTFREUNDLICHES WASSERBASIERTES SCHLAMMENTFLOCKUNGS-/-VERDÜNNUNGSMITTEL
DEFLOCULANT/DILUANT DE BOUE A BASE D'EAU RESPECTUEUX DE L'ENVIRONNEMENT

(30) Priority: 23.11.2004 US 995774
(43) Date of publication of application: 08.08.2007
(73) Proprietor: HALLIBURTON ENERGY SERVICES, INC., Duncan, OK 73533 (US)
(72) Inventor: CARBAJAL, David, Houston, TX 77065 (US); KIRSNER, Jeff, Humble, TX 77396 (US)
(74) Representative: Curtis, Philip Anthony
(86) International application number: PCT/GB2005/004412
(87) International publication number: WO 2006/056745

(56) References cited:
- EP-A- 0 598 378
- US-A- 4 341 645
- US-A- 4 521 578
- US-A- 5 580 379
- US-B1- 6 436 878

## Description

### BACKGROUND OF THE INVENTION

### 1. Field of the Invention

The present invention relates to controlling the viscosity of water based mud systems. More particularly, the present invention relates to methods and compositions for thinning and deflocculating aqueous based fluids used in well drilling and other well operations in subterranean formations, especially subterranean formations containing oil and/or gas. This invention also relates to a drilling fluid thinner and/or dispersant having improved temperature stability, dispersing properties and "solids contamination" tolerance.

### 2. Description of Relevant Art

A drilling fluid or mud is a specially designed fluid that is circulated through a wellbore as the wellbore is being drilled to facilitate the drilling operation. The various functions of a drilling fluid include removing drill cuttings or solids from the wellbore, cooling and lubricating the drill bit, aiding in support of the drill pipe and drill bit, and providing a hydrostatic head to maintain the integrity of the wellbore walls and prevent well blowouts. Specific drilling fluid systems are selected to optimize a drilling operation in accordance with the characteristics of a particular geological formation.

For a drilling fluid to perform its functions, it must have certain desirable physical properties. The fluid must have a viscosity that is readily pumpable and easily circulated by pumping at pressures ordinarily employed in drilling operations, without undue pressure differentials. The fluid must be sufficiently thixotropic to suspend the cuttings in the borehole when fluid circulation stops. The fluid must release cuttings from the suspension when agitating in the settling pits. It should preferably form a thin impervious filter cake on the borehole wall to prevent loss of liquid from the drilling fluid by filtration into the formations. Such a filter cake effectively seals the borehole wall to inhibit any tendencies of sloughing, heaving or cave-in of rock into the borehole. The composition of the fluid should also preferably be such that cuttings formed during drilling the borehole can be suspended, assimilated or dissolved in the fluid without affecting physical properties of the drilling fluid.

Most drilling fluids used for drilling in the oil and gas industry are water-based muds. Such muds typically comprise an aqueous base, either of fresh water or brine, and agents or additives for suspension, weight or density, oil-wetting, fluid loss or filtration control, and rheology control. Controlling the viscosity of water based muds or mud systems has traditionally been done with ferro chrome lignosulfonate deflocculants and/or thinners. Such low molecular weight, heavily sulfonated polymers are believed to aid in coating clay edges in the subterranean formation with a lasting or effectively permanent negative charge. Some alkaline material, such as, for example, caustic soda or potash, is typically added to achieve a pH range from about 9.5 to about 10. This pH environment is believed to aid the solubility and activation of the portion(s) of the lignosulfonate molecules that interact with the clay. These portions are believed to be the carboxylate and phenolate groups on the lignosulfonate. Tannins have also been used for deflocculation of water based muds, and are also typically mixed with a heavy metal such as chrome.

Increasingly, drilling fluids have been subjected to greater environmental restrictions and performance and cost demands. Currently, there is a need for deflocculants and/or thinners that can work effectively at lower pH ranges of about 8 to about 8.5, in freshwater and saltwater based muds, and also be more environmentally compatible or friendlier than chrome or other similar heavy metal containing fluids.

### SUMMARY OF THE INVENTION

The present invention provides improved methods of drilling wellbores in subterranean formations employing water-based muds and compositions for use in such methods. As used herein, the term "drilling" or "drilling wellbores" shall be understood in the broader sense of drilling or wellbore operations, to include running casing and cementing as well as drilling, unless specifically indicated otherwise.

Compositions of the invention comprise a synergistic combination or blend of a non-chrome, ferro lignosulfonate and a dry acrylate copolymer with one or more acrylo amido propane sulfonate (AMPS) functional groups. The composition may be a thinner or deflocculant including or consisting of that synergistic combination or may be a water-based drilling fluid comprising that synergistic combination. Methods of the invention include a method of drilling a wellbore in a subterranean formation employing a fluid containing the synergistic combination and a method of thinning or dispersing a water-based drilling fluid using the synergistic combination.

The synergistic combination of the invention is said to be "synergistic" because although the components are known to have utility in drilling fluids separately, combining the components achieves results significantly and unexpectedly better than the individual components used separately in drilling fluids. Such results include utility for imparting thinning or dispersion of the water based fluid at a broader and closer-to-neutral pH range and tolerance of contaminants such as drill solids, even at higher temperatures such as 300°F. Further, the synergistic combination is readily soluble in both freshwater and saltwater based fluids. Moreover, the synergistic combination does not contain chrome, commonly used with the lignosulfonate component when used separately in the prior art, and thus the synergistic combination is more environmentally friendly or compatible than such prior art.

### BRIEF DESCRIPTION OF THE DRAWINGS

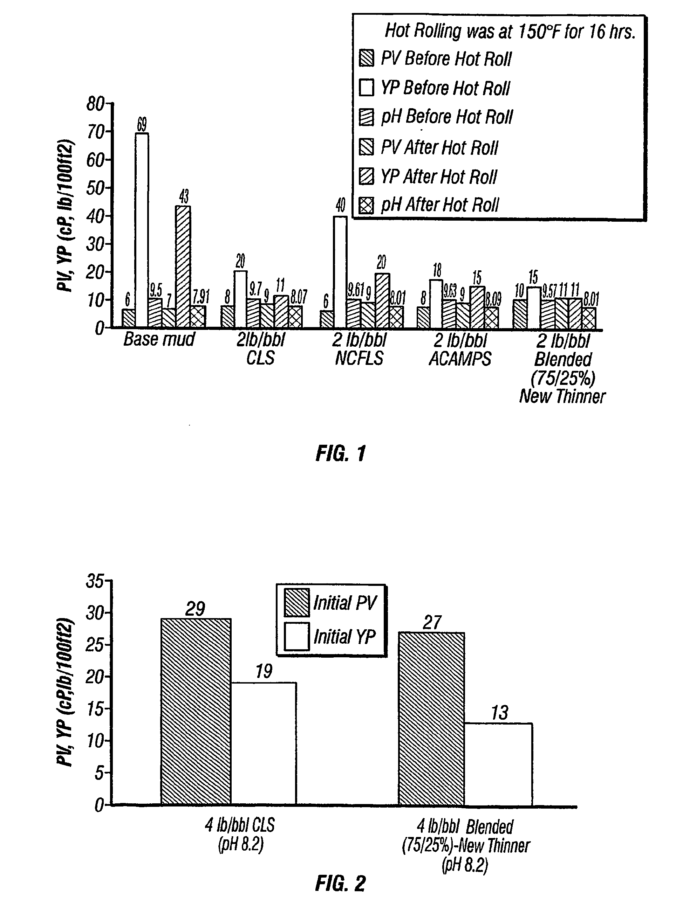

Figure 1 is a graph comparing the plastic viscosity and yield point of 1.7 kg/l (14.0 Ib/gal) seawater based fluids containing the synergistic combination of the invention with other 1.7 kg/l (14.0 1b/gal) seawater based fluids not having the combination, including fluids containing one but not both of the components of the combination, and all of the fluids having 0.17 kg/l (60 Ib/bbl) Rev Dust.
Figure 2 is a graph comparing the plastic viscosity and yield point of a 1.7 kg/l (14.0 1b/gal) freshwater based fluid containing the synergistic combination of the invention and 0.17 kg/ (60 1/bbl) Rev Dust with another 1.7 kg/l (14.0 1b/gal) freshwater based fluid containing a prior art thinner/deflocculant at a pH of about 8.2 and 0.17 kg/l (60 1b/bbl) Rev Dust.

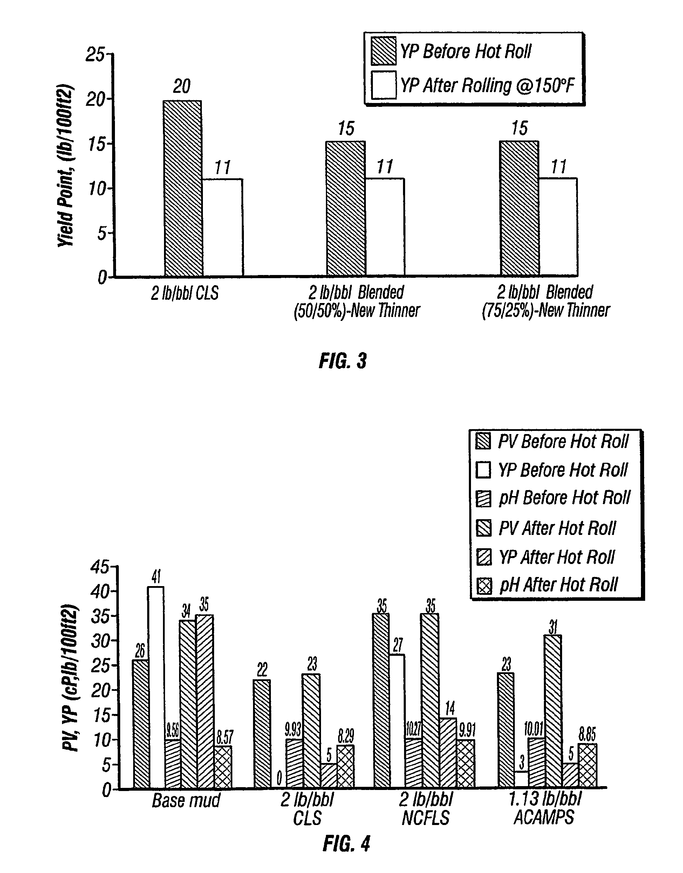

Figure 3 is a graph comparing the yield point of 1.7 kg/l (14.0 1b/gal) seawater based fluids containing two different ratios of the synergistic combination of the invention and 0.17 kg/l (60 1b/bbl) Rev Dust with a 1.7 kg/l (14.0 1b/gal) seawater based fluid containing the same amount of prior art thinner/deflocculant and 0.17 kg/l (60 1b/bbl) Rev Dust.
Figure 4 is a graph comparing the plastic viscosity and yield point of 1.7 kg/l (14.0 1b/gal) freshwater based fluids containing various prior art thinner/deflocculants with 0.17 kg/l (60 1b/bbl) Rev Dust before and after aging.

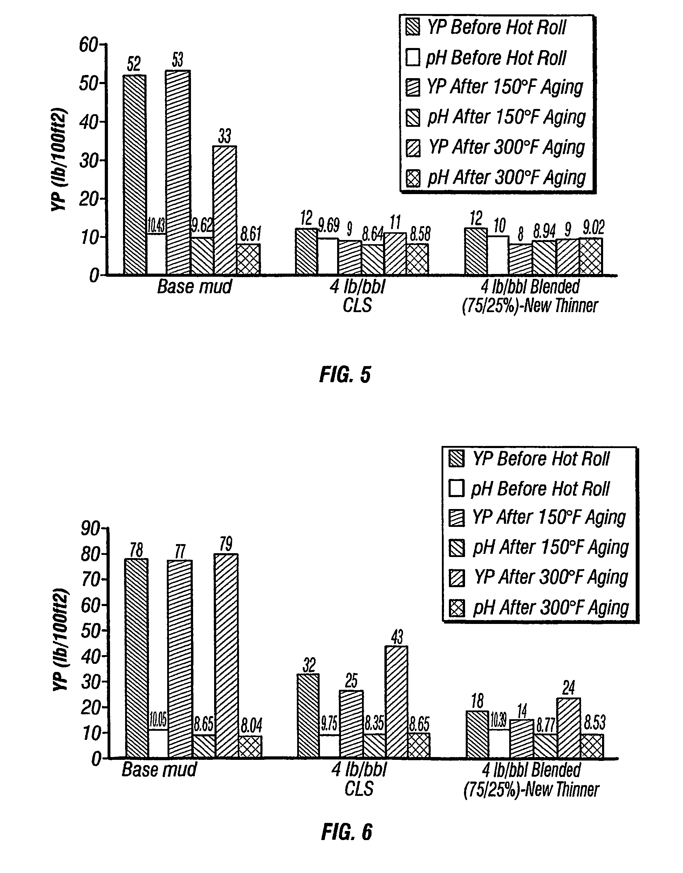

Figure 5 is a graph comparing the yield point of a 1.7 kg/l (14.0 1b/gal) freshwater based fluid containing the synergistic combination of the invention with a 1.7 kg/l (14.0 1b/gal) freshwater based fluid containing a prior art thinner/deflocculant before and after aging at 66°C (150°F) and 149°C (300°F) with 0.17 kg/l (60 1b/bbl) Rev Dust.
Figure 6 is a graph comparing the yield point of 1.7 kg/l (14.0 1b/gal) freshwater based fluid containing the synergistic combination of the invention with a 1.7 kg/l (14.0 1b/gal) freshwater based fluid containing a prior art thinner/deflocculant before and after aging at 66°C (150°F) and 149°C (300°F) with 0.23 kg/l (80 1b/bbl) Rev Dust.

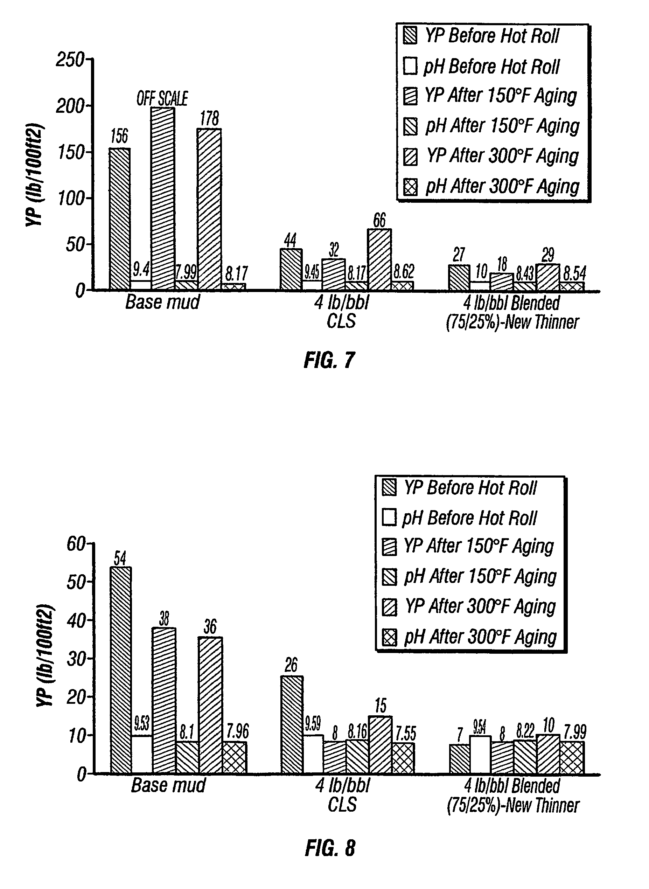

Figure 7 is a graph comparing the yield point of 1.7 kg/l (14.0 1b/gal) freshwater based fluid containing the synergistic combination of the invention with a 1.7 kg/l (14.0 1b/gal) freshwater based fluid containing a prior art thinner/deflocculant before and after aging at 66°C (150°F) and 149°C (300°F) with 0.29 kg/l (100 1b/bbl) Rev Dust.
Figure 8 is a graph comparing the yield point of a 1.7 kg/l (14.0 1b/gal) seawater based fluid containing the synergistic combination of the invention with a 1.7 kg/l (14.0 1b/gal) seawater based fluid containing a prior art thinner/deflocculant before and after aging at 66°C (150°F) and 149°C (300°F) with 0.17 kg/l (60 1b/bbl) Rev Dust.

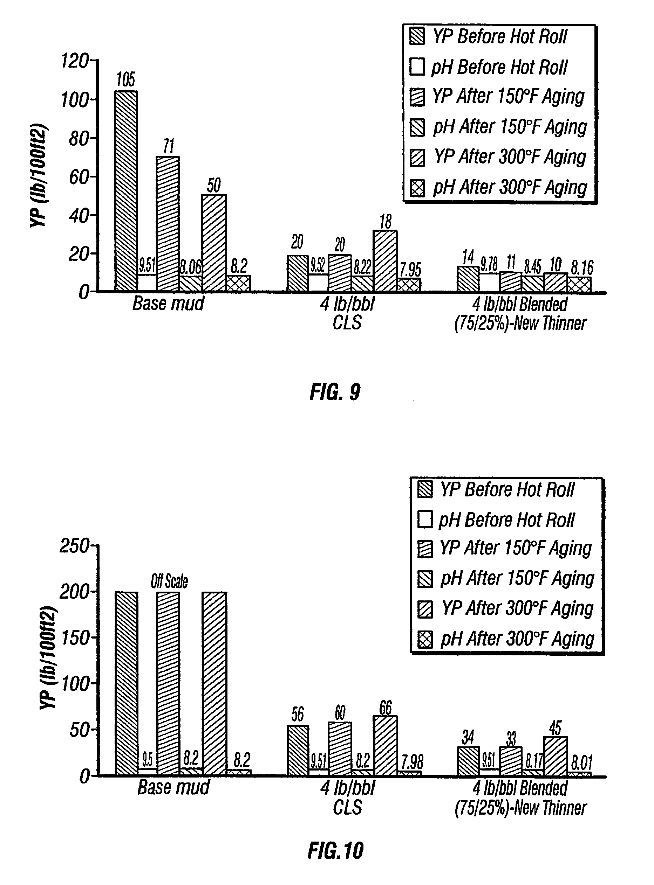

Figure 9 is a graph comparing the yield point of a 1.7 kg/l (14.0 1b/gal) seawater based fluid containing the synergistic combination of the invention with a 1.7 kg/l (14.0 1b/gal) seawater based fluid containing a prior art thinner/deflocculant before and after aging at 66°C (150°F) and 149°C (300°F) with 0.23 kg/l (80 1b/bbl)Rev Dust.
Figure 10 is a graph comparing the yield point of a 1.7 kg/l (14.0 1b/gal) seawater based fluid containing the synergistic combination of the invention with a 1.7 kg/l (14.0 1b/gal) seawater based fluid containing a prior art thinner/deflocculant before and after aging at 66°C (150°F) and 149°C (300°F) with 0.29 kg/l (100 1b/bbl) Rev Dust.

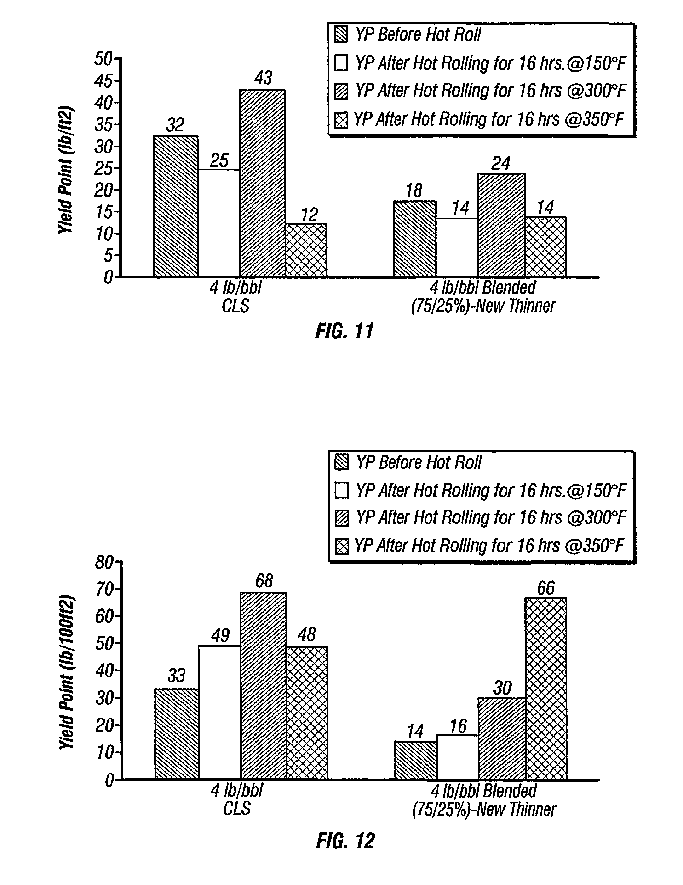

Figure 11 is a graph comparing the yield point of a 1.7 kg/l (14.0 1b/gal) freshwater based fluid containing the synergistic combination of the invention with a 1.7 kg/l (14.0 1b/gal) freshwater based fluid containing a prior art thinner/deflocculant before and after aging at 66°C (150°C), 149°C (300°F) and 177°C (350°F) with 0.17 kg/l (60 1b/bbl) Rev Dust.
Figure 12 is a graph comparing the yield point of a 1.7 kg/l (14.0 1b/gal) seawater based fluid containing the synergistic combination of the invention with a 1.7 kg/l (14.0 1b/gal) seawater based fluid containing a prior art thinner/deflocculant before and after aging at 66°C (150°F), 149°C (300°F) and 177°C (350°F) with 0.17 kg/l (60 1b/bbl) Rev Dust.

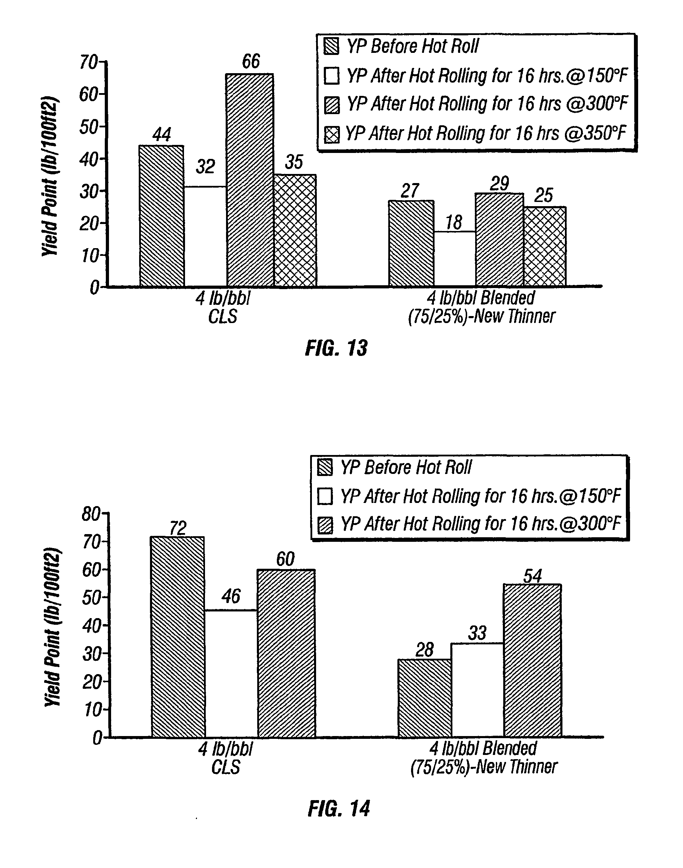

Figure 13 is a graph comparing the yield point of a 1.7 kg/l (14.0 1b/gal) freshwater based fluid containing the synergistic combination of the invention with a 1.7 kg/l (14.0 1b/gal) freshwater based fluid containing a prior art thinner/deflocculant before and after aging at 66°C (150°F), 149°C (300°F) and 177°C (350°F) with 0.29 kg/l (100 1b/bbl) Rev Dust.
Figure 14 is a graph comparing the yield point of 1.7 kg/l (14.0 1b/gal) freshwater based fluid containing the synergistic combination of the invention with a 1.7 kg/l (14.0 1b/gal) freshwater based fluid containing a prior art thinner/deflocculant before and after aging at 66°C (150°F) and 149°C (300°F) with 0.23 kg/l (80 1b/bbl) Rev Dust and contaminated with 10% by weight NaCl.

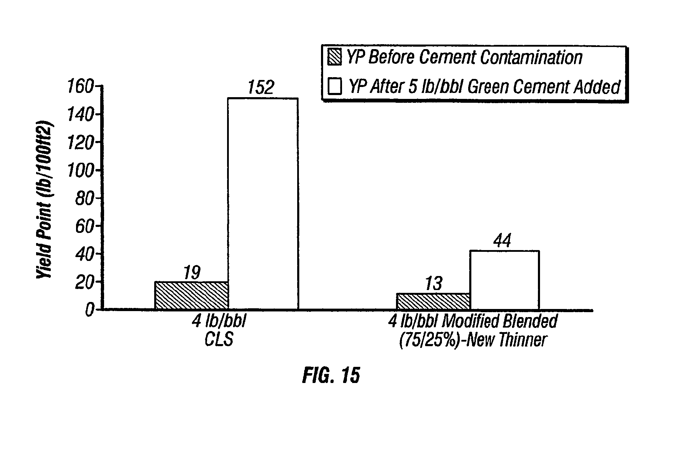

Figure 15 is a graph comparing the yield point of 1.7 kg/l (14.0 1b/gal) freshwater based fluid containing the synergistic combination of the invention and 0.17 kg/l (60 1b/bbl) Rev Dust with a 1.7 kg/l (14.0 1b/gal) freshwater based fluid containing a prior art thinner/deflocculant and 0.17 kg/l (60 1b/bbl) Rev Dust before and after contamination with green cement.

### DETAILED DESCRIPTION OF PREFERRED EMBODIMENT

The present invention provides a synergistic combination or blend of two known materials that surprisingly, when combined according to the present invention, impart thinning to water based mud systems comparable to or better than prior art lignosulfonate deflocculants and/or thinners while effecting such thinning at lower, less caustic, pH, namely about 8.0 to 8.5, than with prior art lignosulfonate deflocculants and/or thinners. Moreover, the synergistic combination of the invention has the advantage of containing no heavy metals such as chrome, and is believed to be more environmentally friendly than prior art deflocculants/thinners containing such heavy metals. Further, the synergistic combination is effective at thinning or dispersing water based muds at high temperatures and over a relatively broad pH range, and is tolerant of contaminants such as cement, anhydrite and sodium, as well as drill solids.

The components of the synergistic combination of the invention are a non-chrome, ferro lignosulfonate and a dry acrylate copolymer with acrylo amido propane sulfonate (AMPS) functional groups. Without wishing to be limited by theory, it is believed that the AMPS functional groups impart higher temperature stability and greater functionality at a wider pH range in the combination. The combination effects thinning and/or deflocculation in saltwater based fluids and in fresh water based fluids and is believed useful and readily soluble in any water based mud suitable for use in drilling or well operations in a subterranean formation, particularly for the discovery and/or recovery of oil and/or gas. Such muds should not contain chrome (or other similar heavy metals) and most preferably will have a pH of about 8.0 to about 8.5, although the combination will provide thinning and/or deflocculation over a pH range of about 8.0 to about 10.5.

The preferred thinner or deflocculant of the present invention comprises the synergistic combination of the invention, namely non-chrome, ferro lignosulfonate and a dry acrylate copolymer with one or more AMPS functional groups. Preferably, the copolymer will have about 10 AMPS groups per 100 polymer molecular units and the copolymer will have a molecular weight in the range of about 10,000 mol. wt. Also preferably, the ratio (by weight) of non-chrome, ferro lignosulfonate to dry acrylate copolymer with AMPS in the combination of the invention will be about 75:25, although any ratio in the range of about 50:50 to about 75:25 is believed to be effective. The preferred drilling fluid of the present invention comprises this preferred thinner or deflocculant, in an amount that thins the particular drilling fluid the amount needed for the conditions in which the fluid will be used.

A preferred method of the present invention of drilling a wellbore in a subterranean formation comprises employing the preferred water based drilling fluid of the invention containing the preferred thinner or deflocculant of the invention. Most preferably, the thinner or deflocculant is provided with a pH environment of about 8.0 to about 8.5. The synergistic combination is believed effective at thinning or deflocculating a water based drilling fluid from temperatures below 66°C (150°F) to as high as about 177°C (350°F).

The following examples are illustrative of the synergistic effects of the combination of the invention.

### Experimental

Rheological properties or parameters of particular interest in evaluating the effectiveness of thinners or deflocculants in a drilling fluid are plastic viscosity and yield point. Plastic viscosity, PV, is a measure of the internal resistance to fluid flow attributable to the amount, type, and size of solids present in a given fluid. The value, expressed in centipoises, is proportional to the slope of the consistency curve determined in the region of laminar flow for materials obeying Bingham's Law of Plastic Flow. Yield point, YP, is the resistance to initial flow, or represents the stress required to start fluid movement. This resistance is believed to be due to electrical charges located on or near the surfaces of the particles. Values of yield point and thixotropy, respectively, are measurements of the same fluid properties under dynamic and static states. Generally, a lower yield point value indicates that the thinner or dispersant is effective in the particular drilling fluid being tested.

Plastic viscosity and yield point were measured for different samples of a 1.7 kg/l (14.0 1b/gal) saltwater (NaCl) based drilling fluid with 0.17 kg/l (60 1b/bbl) Rev Dust (contaminant simulating drill solids), and a pH of about 9.5. The samples were identical except for content of deflocculant and/or thinner. One sample contained the base mud without any thinner; one sample contained the base mud with 0.0057 kg/l (2 1b/bbl) of a commercially available drilling fluid thinner containing chrome lignosulfonate (CLS); one sample contained the base mud with 0.0057 kg/l (2 1b/bbl) of a commercially available drilling fluid thinner containing non-chrome, ferro lignosulfonate (NCFLS) (one component of the synergistic combination of the invention without the other component of the combination); one sample contained the base mud with 0.0057 kg/l (2 1b/bbl) of a commercially available drilling fluid additive containing a dry acrylate copolymer with AMPS functional groups (ACAMPS) (the other component of the combination of the invention without the first component of the combination); and one sample contained the base mud with 0.0057 kg/l (2 1b/bbl) of the synergistic combination of the invention-both non-chrome, ferro lignosulfonate and a dry acrylate copolymer with AMPS functional groups. Measurements of the yield point and plastic viscosity were taken for each sample before and after hot rolling at 66°C (150°F) for 16 hours. The results of the measurements are graphed in Figure 1. The best results were obtained with the synergistic combination of the invention, which provided a lower initial yield point and a lower after aging yield point than the two components separately or than with the commercially available thinner including chrome. Similar synergistic thinning effectiveness results were seen with the combination of the invention at temperatures up to 177°C (350°F) and with fluids having varying amounts of Rev Dust concentrations. Representative data from these additional tests comparing the synergistic combination of the invention-both non-chrome, ferro lignosulfonate (NCFLS) and a dry acrylate copolymer with AMPS functional groups (ACAMPS)-to a commercially available drilling fluid thinner containing chrome lignosulfonate (CLS) is shown below. Particularly see Figures 8-14 for tests in seawater and Figures 2, and 4-7 for tests in freshwater. Synergistic thinning effectiveness results were also seen with the combination of the invention at a lower pH range of 8.2 as shown by the plastic viscosity and yield point measurements graphed in Figure 2, when compared to the results with the commercially available drilling fluid thinner containing chrome lignosulfonate.

As indicated above, the advantages of the methods of the invention may be obtained by employing a drilling fluid of the invention, including the synergistic combination of the invention as a thinner or deflocculant in drilling operations. The drilling operations-whether drilling a vertical or directional or horizontal borehole, conducting a sweep, or running casing and cementing-may be conducted as known to those skilled in the art with other drilling fluids. That is, a drilling fluid of the invention is prepared or obtained and circulated through a wellbore as the wellbore is being drilled (or swept or cemented and cased) to facilitate the drilling operation. The drilling fluid removes drill cuttings from the wellbore, cools and lubricates the drill bit, aids in support of the drill pipe and drill bit, and provides a hydrostatic head to maintain the integrity of the wellbore walls and prevent well blowouts. The specific formulation of the drilling fluid in accordance with the present invention is optimized for the particular drilling operation and for the particular subterranean formation characteristics and conditions (such as temperatures). For example, the fluid is weighted as appropriate for the formation pressures and thinned as appropriate for the formation temperatures.

The foregoing description of the invention is intended to be a description of preferred embodiments. Various changes in the details of the described fluids and methods of use can be made without departing from the intended scope of this invention as defined by the appended claims.

## Claims

1. An aqueous based drilling fluid composition comprising a thinner or deflocculant comprising chrome free, ferro lignosulfonate and acrylate copolymer with one or more acrylo amido propane sulfonate (AMPS) functional groups, wherein the acrylate copolymer has 10 AMPS groups per 100 polymer molecular units and has a molecular weight in the range of 10,000 mol.wt.

2. A composition according to claim 1 wherein said aqueous base is freshwater.

3. A composition according to claim 1 wherein said aqueous base is brine or saltwater.

4. A composition according to claim 1, 2 or 3 wherein the combination of chrome free, ferro lignosulfonate and acrylate copolymer with one or more acrylo amido propane sulfonate functional groups is present in an amount of from 0.005 kg to 0.02 kg per litre (2 to 8 pounds per barrel).

5. A composition according to claim 1 or 4 wherein said fluid contains no other heavy metals.

6. A composition according to claim 1, wherein said chrome free, ferro lignosulfonate and said acrylate copolymer with one or more acrylo amido propane sulfonate functional groups are present in a ratio of 75 to 25 by weight.

7. Use of a composition according to claim 1 or 5 for thinning or deflocculating drilling fluids.

8. A composition according to claim 1, or 6, having a pH in the range of 8.0 to 10.5.

9. A composition according to claim 1, or 6, having a pH in the range of 8.0 to 8.5.

10. A method for drilling a wellbore in a subterranean formation comprising employing an aqueous based drilling fluid thinned or dispersed with a blend of a chrome free, ferro lignosulfonate and acrylate copolymer with one or more acrylo amido propane sulfonate (AMPS) functional groups, wherein the acrylate copolymer has 10 AMPS groups per 100 polymer molecular units and has a molecular weight in the range of 10,000 mol.wt.

11. A method according to claim 10, wherein the temperature of said formation is in the range of 4°C (40°F) to 177°C (350°F).

12. A method according to claim 10, wherein said lignosulfonate comprises 50 to 75 wt % of said blend.

13. A method according to claim 10, wherein said acrylate copolymer comprises 25 to 50 wt % of said blend.

14. A method according to claim 10, wherein said drilling fluid has a pH in the range of 8.0 to 10.5.

15. A method according to claim 10, wherein said drilling fluid contains no heavy metals.

16. A method according to claim 10, wherein said blend enhances the rheological stability by lowering the yield point and plastic viscosity of said drilling fluid in the presence of fluid contaminants and/or enhances the rheological stability by lowering the yield point and plastic viscosity of said drilling fluid at high temperatures in the range of 66°C to 177°C.

17. A method according to claim 10, wherein said aqueous base is freshwater.

18. A method according to claim 10, wherein said aqueous base is saltwater or brine.

## Patentansprüche

1. Bohrfluid auf Wasserbasis, ein Verdünnungs- oder Entflockungsmittel umfassend, das chromfreies Eisenlignosulfonat und Acrylatcopolymer mit einer oder mehreren acrylamidopropansulfonat-funktionalen Gruppen (AMPS-funktionalen Gruppen) umfasst, wobei das Acrylatcopolymer 10 AMPS-Gruppen pro 100 Polymermoleküleinheiten aufweist und eine molare Masse im Bereich von 10.000 Mol.-Gew.

2. Zusammensetzung nach Anspruch 1, wobei die Wasserbasis Süßwasser ist.

3. Zusammensetzung nach Anspruch 1, wobei die Wasserbasis Sole oder Salzwasser ist.

4. Zusammensetzung nach Anspruch 1, 2 oder 3, wobei die Kombination aus chromfreiem Eisenlignosulfonat und Acrylatcopolymer mit einer oder mehreren acrylamidopropansulfonat-funktionalen Gruppen in einer Menge von 0,005 kg/l bis 0,02 kg/l (2 bis 8 Pound pro Barrel) vorhanden ist.

5. Zusammensetzung nach Anspruch 1 oder 4, wobei das Fluid keine anderen Schwermetalle enthält.

6. Zusammensetzung nach Anspruch 1, wobei das chromfreie Eisenlignosulfonat und das Acrylatcopolymer mit einer oder mehreren acrylamidopropansulfonat-funktionalen Gruppen in einem Gewichtsverhältnis von 75 bis 25 vorhanden sind.

7. Verwendung einer Zusammensetzung nach Anspruch 1 oder 5 als Verdünnungs- oder Entflockungs-Bohrfluide.

8. Zusammensetzung nach Anspruch 1 oder 6, die einen pH-Wert im Bereich von 8,0 bis 10,5 aufweist.

9. Zusammensetzung nach Anspruch 1 oder 6, die einen pH-Wert im Bereich von 8,0 bis 8,5 aufweist.

10. Verfahren zum Bohren eines Bohrlochs in einer Untergrundformation, umfassend das Verwenden eines Bohrfluids auf Wasserbasis, das mit einer Mischung aus einem chromfreien Eisenlignosulfonat und Acrylatcopolymer mit einer oder mehreren acrylamidopropansulfonat-funktionalen Gruppen (AMPS-funktionalen Gruppen) verdünnt oder dispergiert ist, wobei das Acrylatcopolymer 10 AMPS-Gruppen pro 100 Polymermoleküleinheiten aufweist und eine molare Masse im Bereich von 10.000 Mol.-Gew.

11. Verfahren nach Anspruch 10, wobei die Temperatur der Formation im Bereich von 4 °C (40 °F) bis 177 °C (350 °F) liegt.

12. Verfahren nach Anspruch 10, wobei das Lignosulfonat 50 bis 75 Gew. % der Mischung ausmacht.

13. Verfahren nach Anspruch 10, wobei das Acrylatcopolymer 25 bis 50 Gew.-% der Mischung ausmacht.

14. Verfahren nach Anspruch 10, wobei das Bohrfluid einen pH-Wert im Bereich von 8,0 bis 10,5 aufweist.

15. Verfahren nach Anspruch 10, wobei das Bohrfluid keine Schwermetalle enthält.

16. Verfahren nach Anspruch 10, wobei die Mischung durch Absenken des Fließpunktes und Verringern der plastischen Viskosität des Bohrfluids in Gegenwart von Fluidverunreinigungen die rheologische Stabilität verbessert und/oder durch Absenken des Fließpunktes und Verringern der plastischen Viskosität des Bohrfluids bei hohen Temperaturen im Bereich von 66 °C bis 177 °C die rheologische Stabilität verbessert.

17. Verfahren nach Anspruch 10, wobei die Wasserbasis Süßwasser ist.

18. Verfahren nach Anspruch 10, wobei die Wasserbasis Salzwasser oder Sole ist.

## Revendications

1. Composition de fluide de forage à base aqueuse comprenant un diluant ou un défloculant comprenant du lignosulfonate de fer exempt de chrome et un copolymère d'acrylate renfermant un ou plusieurs groupes fonctionnels acrylamidopropanesulfonate (AMPS), dans laquelle le copolymère d'acrylate a 10 groupes AMPS pour 100 motifs moléculaires du polymère et a une masse moléculaire relative de l'ordre de 10 000.

2. Composition selon la revendication 1 dans laquelle ladite base aqueuse est de l'eau douce.

3. Composition selon la revendication 1 dans laquelle ladite base aqueuse est de la saumure ou de l'eau salée.

4. Composition selon la revendication 1, 2 ou 3 dans laquelle l'association de lignosulfonate de fer exempt de chrome et de copolymère d'acrylate renfermant un ou plusieurs groupes fonctionnels acrylamidopropanesulfonate est présente en une quantité de 0,005 kg à 0,02 kg par litre (2 à 8 livres par baril).

5. Composition selon la revendication 1 ou 4 dans laquelle ledit fluide ne contient pas d'autres métaux lourds.

6. Composition selon la revendication 1, dans laquelle ledit lignosulfonate de fer exempt de chrome et ledit copolymère d'acrylate renfermant un ou plusieurs groupes fonctionnels acrylamidopropanesulfonate sont présents en un rapport de 75 pour 25 en poids.

7. Utilisation d'une composition selon la revendication 1 ou 5 pour la dilution ou la défloculation de fluides de forage.

8. Composition selon la revendication 1 ou 6, ayant un pH dans la plage de 8,0 à 10,5.

9. Composition selon la revendication 1 ou 6, ayant un pH dans la plage de 8,0 à 8,5.

10. Procédé pour le forage d'un puits de forage dans une formation souterraine comprenant l'emploi d'un fluide de forage à base aqueuse dilué ou dispersé avec un mélange d'un lignosulfonate de fer exempt de chrome et d'un copolymère d'acrylate renfermant un ou plusieurs groupes fonctionnels acrylamidopropanesulfonate (AMPS), dans lequel le copolymère d'acrylate a 10 groupes AMPS pour 100 motifs moléculaires du polymère et a une masse moléculaire relative de l'ordre de 10 000.

11. Procédé selon la revendication 10, dans lequel la température de ladite formation est dans la plage de 4 °C (40 °F) à 177 °C (350 °F).

12. Procédé selon la revendication 10, dans lequel ledit lignosulfonate constitue 50 à 75 % en poids dudit mélange.

13. Procédé selon la revendication 10, dans lequel ledit copolymère d'acrylate constitue 25 à 50 % en poids dudit mélange.

14. Procédé selon la revendication 10, dans lequel ledit fluide de forage a un pH dans la plage de 8,0 à 10,5.

15. Procédé selon la revendication 10, dans lequel ledit fluide de forage ne contient pas de métaux lourds.

16. Procédé selon la revendication 10, dans lequel ledit mélange augmente la stabilité rhéologique par abaissement du seuil d'écoulement et de la viscosité plastique dudit fluide de forage en présence de contaminants du fluide et/ou augmente la stabilité rhéologique par abaissement du seuil d'écoulement et de la viscosité plastique dudit fluide de forage à des températures élevées dans la plage de 66 °C à 177 °C.

17. Procédé selon la revendication 10, dans lequel ladite base aqueuse est de l'eau douce.

18. Procédé selon la revendication 10, dans lequel ladite base aqueuse est de l'eau salée ou de la saumure.
